# EUROPEAN PATENT SPECIFICATION

(11) **EP 2 045 130 B1**
(45) Date of publication and mention of the grant of the patent: **15.08.2012**
(21) Application number: 08165623.3
(22) Date of filing: 01.10.2008
(51) Int. Cl.: B60Q 3/00, B60Q 3/02

(54) **Interior lamp**
Innenlampe
Lampe d'intérieur

(30) Priority: 02.10.2007 JP 2007259249
(43) Date of publication of application: 08.04.2009
(73) Proprietor: Toyota Boshoku Kabushiki Kaisha, Kariya-shi, Aichi-ken 448-8651 (JP)
(72) Inventor: Omura, Naomi, Kariya-shi Aichi 448-8651 (JP); Yaoichi, Shinichi, Kariya-shi Aichi 448-8651 (JP); Matsumoto, Natsuki, Kariya-shi Aichi 448-8651 (JP)
(74) Representative: TBK

(56) References cited:
- EP-A- 0 622 257
- EP-A- 0 945 675
- DE-A1- 2 507 857
- DE-A1- 19 947 208
- DE-U1- 9 205 626
- US-A1- 2005 174 791
- US-A1- 2006 050 524

## Description

### Field of the Invention

The present invention relates to an interior lamp suited for mounting in a ceiling of an interior of an automobile or the like. More specifically, the present invention relates to an interior lamp capable of achieving a large illuminating part and heretofore unknown aesthetic design, and capable of changing an illumination direction to an arbitrary direction within a large range.

### Description of the Related Art

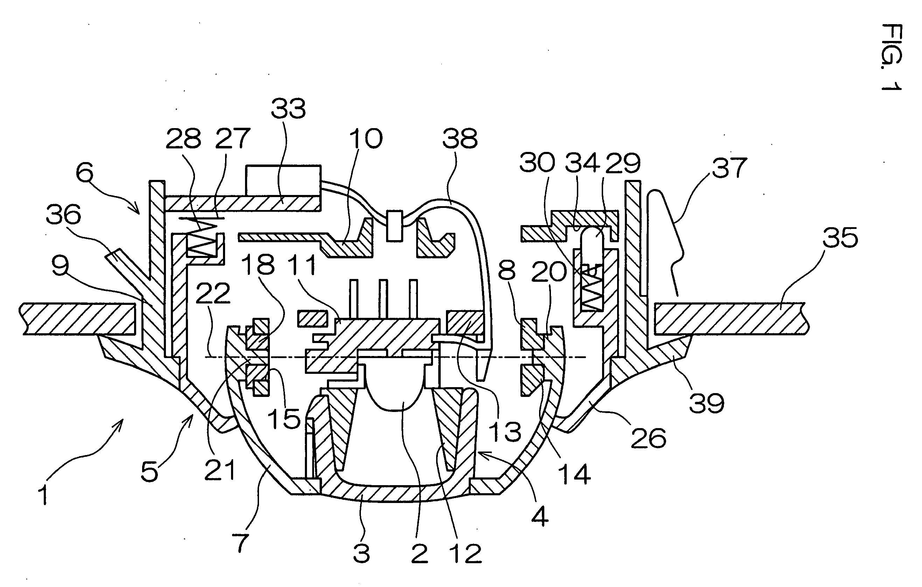

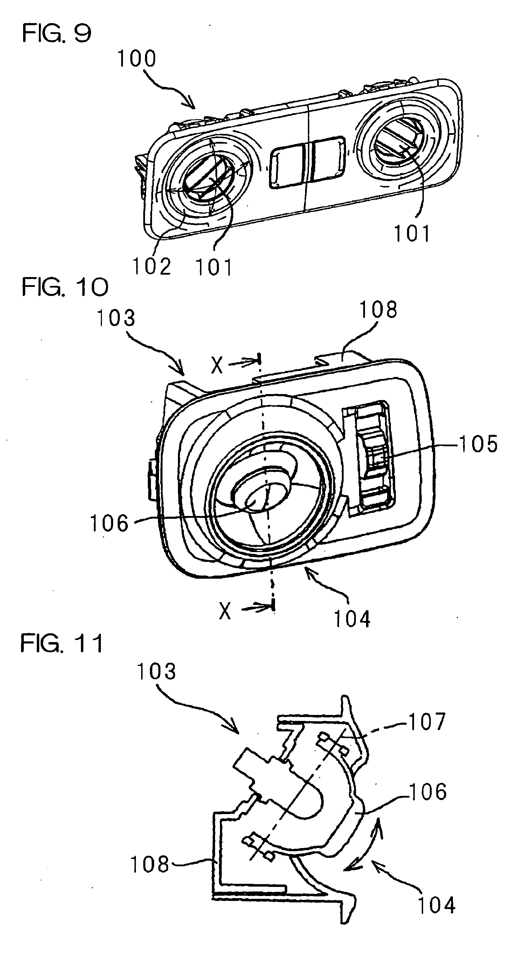

Related art for an interior lamp mounted in the ceiling of a roofed vehicle such as an automobile is known in which rotation of a light source portion can change a direction of illumination. An example of this type of interior lamp is shown in FIG. 9, where an interior lamp 100 is provided with a circular light source portion 101 (see Patent Document 1). Regarding the interior lamp 100, an outer side portion of a bezel 101a supporting a lens of the light source portion 101 is a spherical surface, and a housing 102 is provided so as to hold the outer side portion from front and back surfaces thereof. Furthermore, the outer side portion is slidably supported with respect to a body (see FIG. 1 of Patent Document 1). Accordingly, the illumination direction of the light source portion 101 can be freely changed, and the interior lamp 100 can be used provided in proximity to a rearview mirror normally disposed forward of a front seat or above a side window, for example.
An example of this type of interior lamp is shown in FIG. 10, where the interior lamp 103 is integrally provided with a circular light source portion 104 and a slide type switch 105 laterally disposed therefrom. In the interior lamp 103, as FIG. 11 illustrates, a lens 106 is rotatably supported with respect to a body 108 by two mutually perpendicular rotational shafts 107 (only one is shown in the figure) that are provided on an outer side surface of the lens 106. Accordingly, the illumination direction of an illuminating part, i.e., the lens 106, can be freely changed.

[Patent Document 1] Japanese Patent Application Publication No. JP-A-2005-125870

With the interior lamps 100, 103 according to related art, however, it was impossible to change the illumination direction by a large angle. Namely, this could not be achieved with the interior lamp 100 because although the spherical portion of the bezel 101a must be enlarged to change the illumination direction by a large angle, such enlargement resulted in wraparound of the bezel 101a, which made holding by the housing 102 difficult.
Furthermore, regarding the interior lamp 103, changing the illumination direction by a large angle caused structural elements of the rotational shaft 107 to contact the body 108. As a consequence, changing the illumination direction by a large angle could not be achieved. Moreover, it was necessary to prepare a location for disposing the structural elements of the rotational shaft 107 on an outer peripheral side of the lens 106, which made enlarging the lens 106 with respect to the body 108 difficult.
In addition, even if the illumination direction of the interior lamps 100, 103 is changed, the direction of the light sources does not. Therefore, the illuminated light intensity may not be uniform, and restrictions may be placed on the illumination direction.

Furthermore, an interior lamp according to the preamble of claim 1 is known from US 2005/174791 A1. A further interior lamp is disclosed in DE 25 07 857 A1.

### SUMMARY OF THE INVENTION

In view of the foregoing situation, it is an object of the present invention to provide an interior lamp capable of achieving a large illuminating part and heretofore unknown aesthetic design, and capable of changing an illumination direction to an arbitrary direction within a large range.

According to the present invention, the above object is solved by an interior lamp having the features of claim 1.

According to the interior lamp of the present invention, the support ring is provided on an inner side of the support part that supports the illuminating part, and the support column is provided further inward therefrom. Moreover, the support ring enables rotation in the directions of two shafts. Therefore, a wider angle of mobility can be achieved without exposing the support ring to outside, and an entire interior can be illuminated by changing an orientation of the illuminating part.
The illuminating part capable of moving and changing the illumination direction includes the light source that rotates in concert. Therefore, even if the orientation of the illuminating part is changed, there is no change in an optical system of an optical axis or the like, and a uniform illumination capability can be obtained. In particular, a light source with high directionality such as an LED is preferable and can be used with no problems.
Also, there is no need to provide a location within the housing for disposing a rotation mechanism such as the support ring on an outer peripheral side of the illuminating part and the like. The illuminating part and the like can thus be made larger, and increased design flexibility and a more superior design can also be achieved. Furthermore, illumination of a high light intensity can be achieved.
Since the illumination direction can be changed and illumination of a high light intensity can be achieved in this manner, a single lamp can be used for various applications rather than used only as an auxiliary light source, such as a map lamp, a vanity lamp, a trunk lamp, or a spot lamp. Instead, a single lamp can be used for overall illumination, such as a room lamp.

By inclining the shaft-locating surface of the support column towards the edge side of the support ring, an angle when the support part and the support ring rotate and contact the support column can be made larger compared to when the shaft-locating surface is vertical. In addition, since a wider angle of mobility can be achieved, it is also possible to illuminate the entire interior by changing the orientation of the illuminating part.
Providing the rib on the shaft-locating back surface of the support column can strengthen the support column without narrowing the angle by which the support part and the support ring rotate. Accordingly, the support column that supports the support part and the support ring is even less prone to breakage due to the application of force for a rotation operation and the like, making it possible to obtain a strong interior lamp.
By inclining the shaft-locating back surface of the support column towards the edge side of the support ring, the illuminating part is even less prone to contact the support column when rotating and a rotation angle of the illuminating part can be made larger compared to when the shaft-locating surface is vertical. Therefore, it is possible to illuminate the entire interior by changing the orientation of the illuminating part.

### BRIEF DESCRIPTION OF THE DRAWINGS

FIG. 1 is a vertical cross-sectional view showing a state in which an interior lamp according to an embodiment is sectioned along a first rotational shaft;
FIG. 2 is a vertical cross-sectional view showing a state in which the interior lamp according to the embodiment is sectioned along a second rotational shaft;
FIG. 3 is an exploded assembly drawing of the interior lamp;
FIG. 4 is a partial perspective view for explaining a support structure of a lens holder, a support ring, and a support column;
FIG. 5 is a vertical cross-sectional view showing a state in which an illuminating part is rotated a maximum extent;
FIG. 6 is a vertical cross-sectional view showing a state in which the illuminating part is rotated a maximum extent;
FIG. 7 is a vertical cross-sectional view showing a state during an operation to mount the interior lamp to a ceiling;

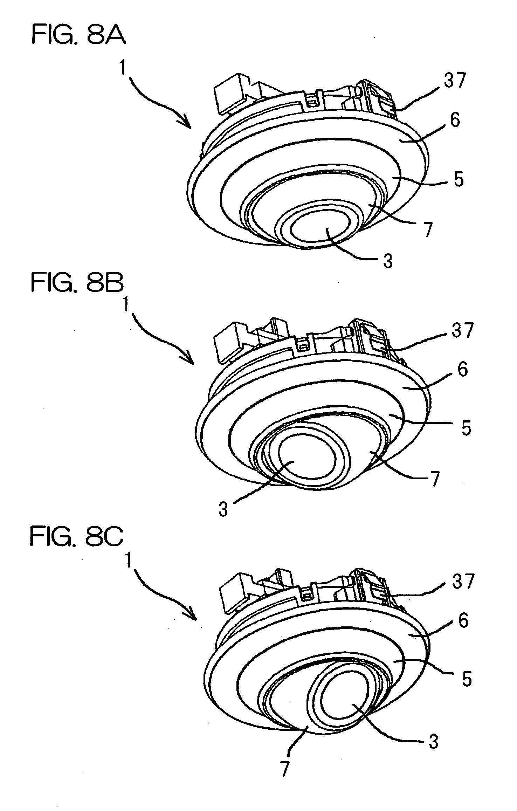

FIGS. 8A to 8C are perspective views showing rotation patterns of the illuminating part, where FIG. 8A shows the illuminating part at a neutral position, FIG. 8B shows the illuminating part rotated around the first rotational shaft, and FIG. 8C shows the illuminating part rotated around the second rotational shaft;
FIG. 9 is a perspective view showing an interior lamp according to related art;
FIG. 10 is a perspective view showing another interior lamp according to related art; and
FIG. 11 is a cross-sectional view showing a state sectioned along a line X-X in FIG. 10.

### DESCRIPTION OF REFERENCE NUMERALS AND SIGNS

1; interior lamp, 2; light source, 3; lens, 4; illuminating part, 5; ring type switch, 6; housing, 7; lens holder (support part), 8; support ring, 10; outer plate, 10a; bottom portion, 10b, 10c; support columns, 10e; shaft-locating surface, 10f; shaft-locating back surface and 10g; rib.

### DETAILED DESCRIPTION OF THE PREFERRED EMBODIMENT

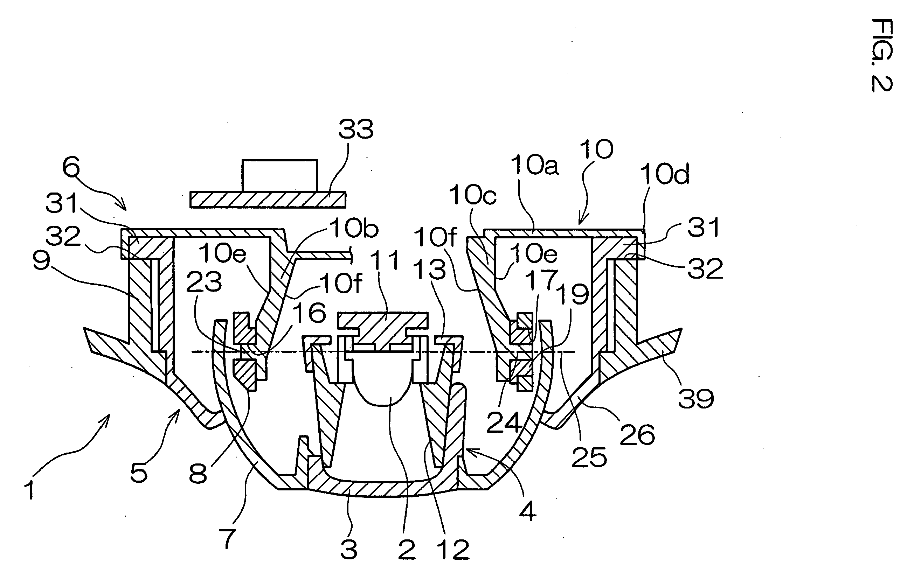

As exemplified in FIGS. 1 and 2, an interior lamp 1 according to the present invention includes: an illuminating part 4 that is provided with a light source 2; a switch 5 that performs selection of a lighting control for the light source 2; a support part 7 that is provided around the illuminating part 4 and supports the illuminating part 4; a support ring 8 that is positioned on an inner side of the support part 7 and rotatably supports the support part 7; and a housing 6 that includes a bottom portion 10a and support columns 10b and 10c, which are formed standing from the bottom portion 10a and are positioned on an inner side of the support ring 8, and that supports the switch 5 and also rotatably supports the support ring 8.

The present interior lamp can be mounted in a ceiling of an interior such as that of an automobile or the like. In addition, the present interior lamp can also be used as an interior lamp necessitating rotation of the illuminating part to obtain an arbitrary illumination direction. Conceivable examples include interior illumination in a conveyance such as a vehicle, ship, or airplane, and illumination embedded in household furnishings.

The above-mentioned "illuminating part" is not particularly limited in terms of size, quantity and the like, provided that the illuminating part is supported on the housing by the support part and the support ring, and an illumination direction thereof can be changed by two shafts between the support part and the support ring and between the support ring and the housing, respectively. The two shafts are ordinarily disposed so as to be at right angles to one another. However the two shafts are not restricted to this arrangement, and an angle formed by the two rotational shafts is not particularly limited. In addition, since the illuminating part is provided with a light source, an orientation of the light source simultaneously changes with a change in an orientation of the illuminating part.
The above-mentioned "light source" is not particularly limited in terms of type, shape, size, quantity and the like, provided that the light source electrically emits light. The light source may be an LED, for example.
Also, the illuminating part and/or the light source may be provided with a lens for adjusting light flux emitted from the light source. The lens is not limited in terms of size, material, shape and the like, provided that the lens is capable of diffusing light from the light source in a range depending on the application.

The above-mentioned "switch" is not particularly limited in terms of shape, size and the like, provided that the switch can be used to select a lighting control for the light source. The selection of a lighting control can be performed at will. For example, three modes may be selected consisting of regular lighting and non-lighting of the interior lamp, and lighting associated with the opening and closing of a door, or two modes may be selected consisting of lighting and non-lighting of the interior lamp. The switch can also be used to select a brightness, a flashing mode and the like of the interior lamp.

The above-mentioned "support part" is not particularly limited in terms of size, shape, material and the like, provided that the support part is disposed around the illuminating part, and supports the illuminating part and is also rotatably supported by the support ring. Conceivable examples include a bowl shape whose center is provided with a hole for disposing the illuminating part. In addition, the support part may be provided exposed at a visible position as part of a design, or provided hidden at a position that cannot be seen due to the illuminating part and the like.
The above-mentioned "support ring" is not particularly limited in terms of size, material and the like, provided that the support ring is positioned on an inner side of the support part and rotatably supports the support part, and is a ring that is rotatably supported on the housing. The support ring is normally circular; however, the support ring is not limited to this shape and may be provided partially indented for the purpose of avoiding contact with another member and the like, or have an open circle configuration.

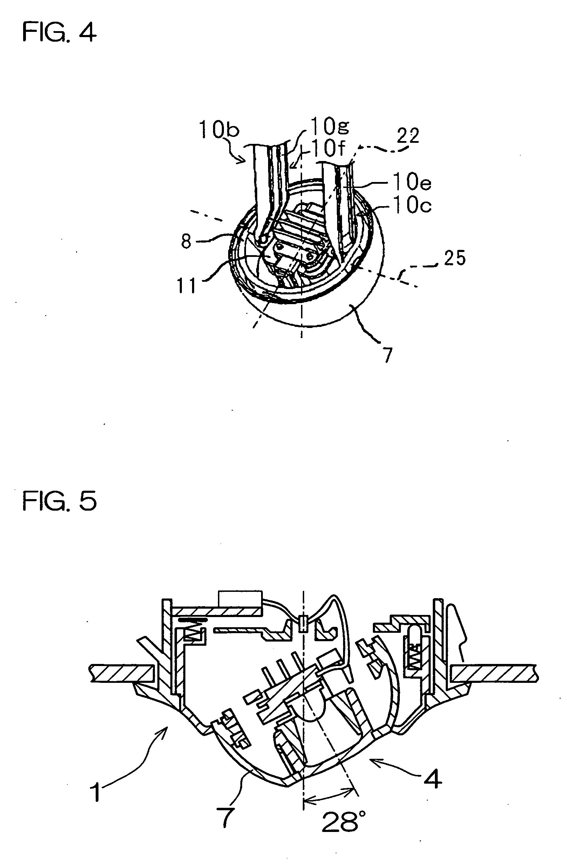

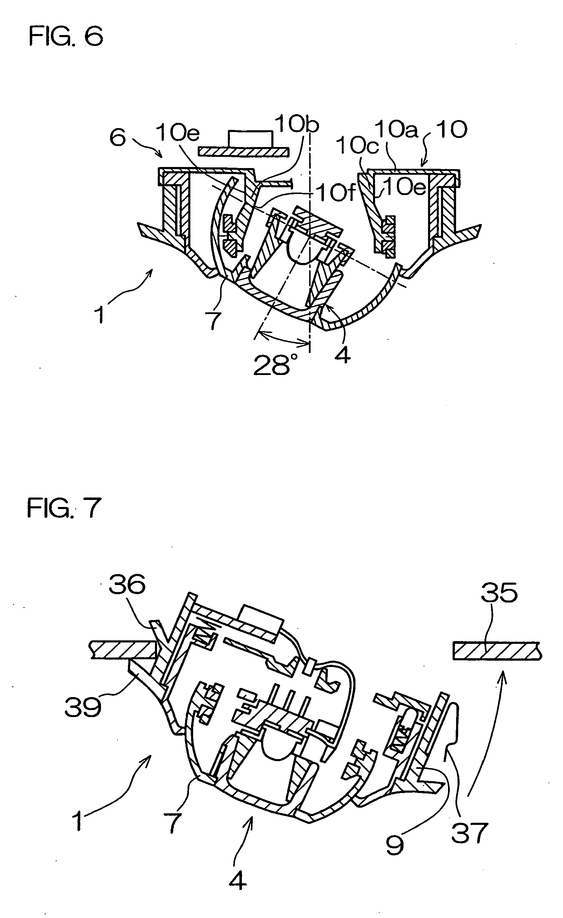

The above-mentioned "housing" is not particularly limited in terms of shape, size and the like, provided that the housing supports the support ring and the switch. The housing may be made, for example, from materials such as synthetic resin, metal and the like. Also, an arbitrary flat shape may be selected for the housing, including examples such as a perfect circle shape, a regular polygon shape (e.g. from a regular triangle to a regular dodecagon or the like), and an oval shape. Among these examples, the perfect circle shape is particularly preferable. This is due to the fact that a design significantly different from an interior lamp according to related art can be obtained.
One or two support columns may be formed standing from the bottom portion of the housing, and an end of the support column rotatably supports the support ring. Furthermore, an arbitrary shape may be selected for the support column provided that the shape does not interfere with the rotation of the illuminating part, the support part, or the support ring. For example, as shown in FIGS. 2 and 4, a shaft-locating surface 10e provided with a bearing (not shown) and/or shafts 23, 24 supporting the support ring 8 may be disposed so as to incline toward an edge side of the support ring 8.
With such a configuration, the bottom portion 10a side of the support columns 10b and 10c approaches a center side of the illuminating part 4, the support part 7, and the support ring 8, which projects toward a bottom surface of the housing 6. Therefore, as exemplified in FIG. 6, an edge portion of the illuminating part 4 and the like can rotate more and be accommodated farther inward than the shafts 23, 24 supporting the support ring 8. Accordingly, there is no contact with the support columns 10b and 10c and the illuminating part 4 can be rotated at a wider angle. Note that the shaft-locating surface 10e is not limited to a flat surface, and may instead be a curved surface, or a bent surface whose side profile is zigzagged. These side profiles are effective for securing a wide space on the bottom portion 10a side so that even if the illuminating part 4 and the like rotates at a wider angle, an edge portion thereof is not prone to contacting the shaft-locating surface 10e.
As exemplified in FIG. 4, the shaft-locating back surface 10f of the support columns 10b and 10c can be further provided with a rib 10g. Even if the illuminating part 4 and the like rotate, the shaft-locating surface 10e contacts the edge portion thereof before the shaft-locating back surface 10f. Providing the rib 10g on the shaft-locating back surface 10f therefore has no impact on a rotatable angle of the illuminating part 4 and is effective for increasing the strength of the support columns 10b and 10c.
As exemplified in FIGS. 2 and 4, the shaft-locating back surface 10f of the support columns 10b and 10c may also be disposed so as to incline toward the edge side of the support ring 8. The support columns 10b and 10c provided with such a shaft-locating back surface 10f can easily secure a wider space on an end side supporting the support ring 8. And as exemplified in FIG. 6, an angle when the illuminating part 4 rotates and contacts the support columns 10b and 10c can be made larger compared to when the shaft-locating back surface 10f is vertical.
In addition, one support column with one bottom portion and which branches partway into a Y shape may be used. Such a support column may be provided so as to support the support ring on a branched end side to further ensure that the edge portion of the illuminating part and the like does not contact the shaft-locating surface.

### Embodiment

Hereinafter, a specific description of the present invention will be given with reference to the accompanying drawings. The present interior lamp is an interior lamp for a passenger vehicle such as an automobile.

### (1) Structure of the Embodiment

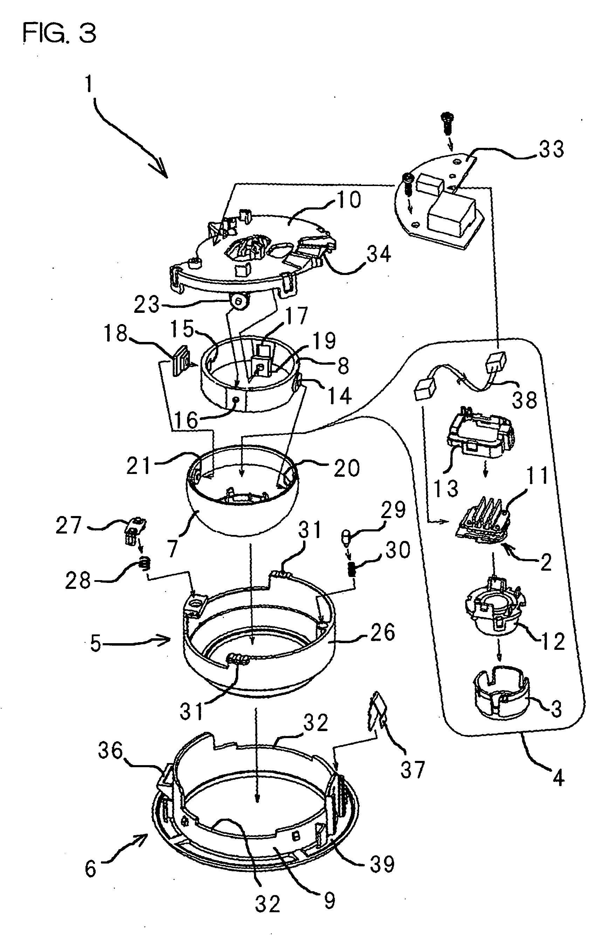

As FIGS. 3 to 6 illustrate, an interior lamp 1 according to the present embodiment includes an illuminating part 4 provided with a light source 2 and a lens 3; a ring type switch 5 that performs an on-off control of the light source 2; a housing 6 that supports the illuminating part 4 and the ring type switch 5; and a lens holder 7 and a support ring 8 that are a support part for supporting the illuminating part 4 with respect to the housing 6. In addition, an inner edge of the ring type switch 5 and a surface of the lens holder 7 are positioned so as to be in the vicinity of one another and/or in mutual contact.
The housing 6 is circular and made of synthetic resin, and also includes an outer bezel 9 exposed to an interior side, as well as an outer plate 10 resembling a cover attached to a back side thereof. Other parts are accommodated within the outer bezel 9 and the outer plate 10.
The illuminating part 4 includes an LED unit 11 equipped with an LED serving as the light source 2; an LED holder 12 that prevents the diffusion of light rays from the light source 2; the lens 3, and an LED hold plate 13 integrated with these. The illuminating part 4 is fixed to the lens holder 7.

An inner side of the lens holder 7 is provided with the support ring 8, which has a toric shape. The support ring 8 includes a first rotational shaft end 14 that projects to an outer peripheral side; a first shim-receiving hole 15 formed on a side opposite of the first rotational shaft end 14; a second bearing 16 formed at a position displaced 90 degrees from the first rotational shaft end 14; and a second shim-receiving hole 17 formed on a side opposite of the second bearing 16. A first shim 18 and a second shim 19 are rotatably provided in the first shim-receiving hole 15 and the second shim-receiving hole 17, respectively. The shims 18 and 19 are made of elastomers.

The outer plate 10 is formed from a bottom portion 10a that is a circular disc body whose center is provided with a hole; two support columns 10b and 10c that are provided standing along a periphery of the hole of the bottom portion 10a so as to face one another; and an outer peripheral portion 10d that serves as an outer peripheral portion of the bottom portion 10a and is connected with an end portion of the outer bezel 9. A shaft-locating surface 10e on an end side of the support column 10b is formed with a second rotational shaft end 23 that is received by the second bearing 16 of the support ring 8. Meanwhile, the shaft-locating surface 10e on an end side of the support column 10c is formed with a second shim receiver 24 that holds the second shim 19. Furthermore, the second bearing 16 is combined with the second rotational shaft end 23, and the second shim receiver 24 is combined with the second shim 19 provided in the second shim-receiving hole 17, so as to structure a second rotational shaft 25. Accordingly, the support ring 8 is supported by the outer plate 10 so as to enable rotation and holding at an arbitrary angle (see FIG. 2).
Regarding the support columns 10b and 10c, the shaft-locating surface 10e provided with the second rotational shaft end 23 supporting the support ring 8 and the second shim receiver 24 is disposed so as to incline toward the edge side of the support ring 8. Namely, in FIG. 2 the two support columns 10b and 10c are provided so as to form an angular configuration that widens toward the support ring 8 side. In addition, a shaft-locating back surface 10f that is a surface on a side opposite the shaft-locating surface 10e is also provided so as to incline toward the edge side of the support ring 8 similar to the shaft-locating surface 10e. The shaft-locating back surface 10f is further provided with a rib 10g in a length direction of the support columns 10b and 10c.
Here, a first rotational shaft 22 that connects the lens holder 7 and the support ring 8 forms a 90-degree angle with the second rotational shaft 25 that connects the support ring 8 and the outer plate 10 (see FIG. 4). Additionally, a maximum rotational angle of the rotational shafts is 56 degrees (see FIGS. 5 and 6).

An outer side of the lens holder 7 is provided with the ring type switch 5. The ring type switch 5 includes a toric switch knob 26; a metal switch plate 27 that serves as a switch contact; a switch spring 28 that biases the switch plate 27; and a pin 29 and a pin spring 30 for achieving a feeling of detent during rotation of the switch. A peripheral edge of the switch knob 26 has a pair of flanges 31 that are provided at even intervals, that is, at positions that equally divide the switch knob 26. The flange 31 serves as a rotational shaft of the switch knob 26, wherein the flange 31 is accommodated in a guide hole 32 formed by the outer bezel 9 and the outer plate 10, and guided to within a predetermined rotational angle.
The switch plate 27 contacts a contact pattern of a substrate 33 mounted on the outer plate 10. The pin 29 is movably set in three concave portions 34 formed in the outer plate 10. By rotating the switch knob 26, the pin 29 biased toward the concave portion 34 by the pin spring 30 moves from one concave portion 34 to another concave portion 34. Accordingly, it is possible to achieve a sensation of the state of the switch changing. At the same time, the switch plate 27 moves with respect to the substrate 33, which changes a state of connection with the contact pattern. In the present embodiment, the three modes of regular lighting and non-lighting of the lamp and lighting associated with the opening and closing of a door can be selected.
The outer bezel 9 includes a flange 39 exposed to an interior side, as well as a tab 36 and an engagement spring 37 that catch on a back side of a ceiling 35. The engagement spring 37 and the tab 36 are disposed on opposite sides, and are structured such that the engagement spring 37 elastically deforms during mounting of the interior lamp 1 to the ceiling 35 to allow mounting. After mounting, the engagement spring 37 and the tab 36 prevent detachment by catching on a back surface of the ceiling 35. The outer plate 10 is attached with the substrate 33. The substrate 33 and the LED unit 11 are connected via a wire harness 38.

One interior lamp 1 is provided at a position around a rearview mirror, which is also the ceiling 35 above a front seat of a passenger vehicle. Thus, it is possible to illuminate a wide area ranging from the hands of a passenger in the front seat to a luggage space behind a rear seat.

### (2) Operation of the Embodiment

The assembly sequence of the interior lamp 1 with the above-described structure will be explained next.
First, to assemble the illuminating part 4, the LED holder 12 is mounted to the lens 3 and then the LED unit 11 is placed thereupon, followed by the LED hold plate 13. The LED unit 11 is connected with the wire harness 38. The illuminating part 4 is then mounted to the lens holder 7. Next, the support ring 8 attached with the two shims 18 and 19 is mounted to the inner side of the lens holder 7. At such time, the first rotational shaft end 14 is supported by a first bearing 20, and the first shim 18 is simultaneously supported by the first shim-receiving hole 15. The support ring 8 is further mounted to the outer plate 10. At such time, the second rotational shaft end 23 of the outer plate 10 is supported by the second bearing 16, and the second shim 19 is simultaneously supported by the second shim receiver 24.
Meanwhile, an inner side of the outer bezel 9 is mounted with the switch knob 26. At such time, the flanges 31 of the switch knob 26 enter the guide hole 32 of the outer bezel 9. The switch plate 27 and the switch spring 28 are subsequently mounted, and the pin 29 and the pin spring 30 are also mounted.
Next, the outer plate 10 assembled with the illuminating part 4 is attached to the outer bezel 9. An outer side of the outer plate 10 is further screwed with the substrate 33 and the wire harness 38 is connected with the substrate 33.
When attaching the interior lamp 1 to the ceiling 35, as FIG. 7 shows, the tab 36 of the outer bezel 9 diagonally catches on an edge of a mounting hole of the ceiling 35. The opposite side is then lifted up, after which the engagement spring 37 elastically deforms and presses into the back of the ceiling 35. Thus, detachment is prevented by the tab 36 and the engagement spring 37 catching on the back of the ceiling 35.

The operation of the interior lamp 1 with the above-described structure will be explained next.
When a user grasps and rotates the switch knob 26, the switch plate 27 moves and switches between on and off states of the light source 2. Furthermore, when the user grasps the lens holder 7 of the illuminating part 4 for the application of external force to change an optical axis, as FIG. 7 shows, the lens holder 7 is suitably rotated with respect to the outer plate 10 via the two rotational shafts 22 and 25 of the support ring 8. Accordingly, an arbitrary position within a range of mobility can be illuminated. Here, the rotational shafts 22 and 25 use the shims 18 and 19, and therefore it is possible to maintain an arbitrary angle as set.

### (3) Effects of the Embodiment

According to the interior lamp 1 of the present embodiment, the inner side of the lens holder 7 is provided with the two rotational shafts 22 and 25, whereby the mobility range of the illuminating part 4 can be widely set. More specifically, the support ring 8 is accommodated further inward than a position at which the second rotational shaft end 23 and the second shim receiver 24 are provided as shown in FIGS. 5 and 6 in the present embodiment. As a consequence, a larger mobility range of 56 degrees can be set compared to the mobility range of approximately 24 degrees of the illuminating part 4 in an interior lamp 103 according to related art shown in FIGS. 10 and 11. Thus according to the present embodiment, providing just one interior lamp 1 at a position around the rearview mirror, which is also the ceiling 35 above the front seat of the passenger vehicle makes it possible to include the entire interior in an illumination range. As a consequence, compared to cases in the past where in addition to a lamp disposed in the center of the ceiling, a plurality of interior lamps including a vanity lamp and a trunk lamp is also provided, the number of lamps can be considerably reduced and one lamp can be used for various applications.
Furthermore, according to the present embodiment, the shaft-locating back surface 10f is provided with the rib 10g, thus giving the support columns 10b and 10c strength so as not to easily break even if the lens holder 7 is grasped and an external force applied to change the optical axis.
In the present embodiment, the light source 2 is an LED and can achieve higher spot performance and greater downsizing, compared to when a bulb is used. Additionally, since the light source 2 can be made small, it is possible to provide the light source 2 within the illuminating part 4.
An interior lamp can thus be obtained whose light intensity does not change regardless of the orientation of the illuminating part 4.

It should be noted that the present invention is not limited to the embodiment described above, and various modifications depending on the purpose and application are possible that fall within the scope of the present invention. Namely, although in the above embodiment the two support columns 10b and 10c are provided, one support column with a Y shape may be used such that two branched ends thereof rotatably support the support ring 8. Furthermore, in the above embodiment, an LED is used as the light source 2.
However, the present invention is not limited to this and a bulb may also be used, for example. According to the above embodiment, the two rotational shafts 22 and 25 are provided on the inner side of the lens holder 7. However, the present invention is not limited to this, and two rotational shafts may be provided on an outer side of the lens holder 7, for example.
Moreover, in the above embodiment, the illuminating part 4 includes the light source 2 and the lens 3. However, the present invention is not limited to this, and for example, the illuminating part 4 may include only the light source 2 and not have the lens 3, or the illuminating part 4 may include only the lens 3 with the light source 2 fixed to the housing 6.
Furthermore, in the above embodiment, the interior lamp 1 is disposed at only one location in the ceiling 35 of a passenger vehicle. However, the present invention is not limited to this and the interior lamp 1 may be disposed at a plurality of locations, for example.

The present interior lamp is utilized as an interior lamp of an automobile. More specifically, the present invention is well suited for use as a compact interior lamp with a superior design.
The present invention provides an interior lamp capable of changing an illumination direction to an arbitrary direction within a large range, and illuminating an entire floor surface in an interior with one lamp. The present interior lamp includes an illuminating part 4 that is provided with a light source 2, a switch 5 that performs selection of a lighting control for the light source, a support part 7 that is provided around the illuminating part and supports the illuminating part, a support ring 8 that is positioned on an inner side of the support part and rotatably supports the support part, and a housing 6 that includes a bottom portion 10a and support columns 10b and 10c, which are formed standing from the bottom portion and are positioned on an inner side of the support ring 8, and that supports the switch and also rotatably supports the support ring.

## Claims

1. An interior lamp (1) comprising:
an illuminating part (4) that is provided with a light source (2);
a switch (5) that performs selection of a lighting control for said light source (2);
a support part (7) that is provided around said illuminating part (4) and supports said illuminating part (4);
a support ring (8) that is positioned on an inner side of said support part (7) and rotatably supports said support part (7); and
a housing (6) that supports said switch (5) and that includes support columns (10b, 10c) rotatably supporting said support ring (8),
**characterized in that** the housing (6) includes a bottom portion (10a) and that the support columns (10b, 10c) are formed standing from said bottom portion (10a) and are positioned on an inner side of said support ring (8), wherein said support columns (10b, 10c) are provided with a shaft-locating surface (10e) having a bearing (23, 24) supporting said support ring (8), wherein said shaft-locating surface (10e) is inclined toward an edge side of said support ring (8) and a bottom portion (10a) side of the support columns (10b, 10c) approaches a center side of the illuminating part (4) such that an edge portion of the illuminating part (4) can rotate farther inward than the bearing (23, 24) when rotating toward the bottom portion (10a) side.

2. The interior lamp (1) according to claim 1, wherein said support columns (10b, 10c) are provided with a rib (10g) in a standing direction on a shaft-locating back surface (10f) that is a surface on a side opposite said shaft-locating surface (10e) supporting said support ring (8).

3. The interior lamp (1) according to claim 2, wherein said support columns (10b, 10c) are provided such that said shaft-locating back surface (10f) is inclined toward the edge side of said support ring (8).

## Patentansprüche

1. Innenlampe (1) mit:
einem Beleuchtungsabschnitt (4), der mit einer Lichtquelle (2) versehen ist;
einem Schalter (5), der eine Auswahl einer Beleuchtungssteuerung der Lichtquelle (2) durchführt;
einem Stützabschnitt (7), der um den Beleuchtungsabschnitt (4) herum vorgesehen ist und den Beleuchtungsabschnitt (4) stützt;
einem Stützring (8), der an einer inneren Seite des Stützabschnitts (7) positioniert ist und den Stützabschnitt (7) drehbar stützt; und
einem Gehäuse (6), das den Schalter (5) stützt und das Stützsäulen (10b, 10c) aufweist, die den Stützring (8) drehbar stützen, **dadurch gekennzeichnet, dass**
das Gehäuse (6) einen Bodenabschnitt (10a) aufweist und dass die Stützsäulen (10b, 10c) von dem Bodenabschnitt (10a) stehend ausgebildet sind und an einer Innenseite des Stützrings (8) positioniert sind, wobei die Stützsäulen (10b, 10c) mit einer Wellenpositionierungsfläche (10e) vorgesehen sind, die ein Lager (23, 24) hat, das den Stützring (8) stützt, wobei die Wellenpositionierungsfläche (10e) in Richtung zu einer Kantenseite des Stützrings (8) geneigt ist und eine Seite des Bodenabschnitts (10a) der Stützsäulen (10b, 10c) eine Zentrumsseite des Beleuchtungsabschnitts (4) annähert, sodass sich ein Kantenabschnitt des Beleuchtungsabschnitts (4) weiter einwärts als das Lager (23, 24) drehen kann, wenn es sich zu der Seite des Bodenabschnitts (10a) dreht.

2. Innenlampe (1) gemäß Anspruch 1, wobei die Stützsäulen (10b, 10c) mit einer Rippe (10g) in einer stehenden Richtung an der Wellenpositionierungsrückfläche (10f) versehen sind, die eine Fläche an einer Seite ist, die der den Stützring (8) stützenden Wellenpositionierungsfläche (10e) entgegengesetzt ist.

3. Innenlampe (1) gemäß Anspruch 2, wobei die Stützsäulen (10b, 10c) derart vorgesehen sind, dass die Wellenpositionierungsrückfläche (10f) in Richtung zu der Kantenseite des Stützrings (8) geneigt ist.

## Revendications

1. Lampe intérieure (1) comprenant :
une partie d'éclairage (4) qui est dotée d'une source de lumière (2) ;
un commutateur (5) qui effectue la sélection d'une commande d'éclairage pour ladite source de lumière (2) ;
une partie de support (7) qui est pourvue autour de ladite partie d'éclairage (4) et qui soutient ladite partie d'éclairage (4) ;
une bague de support (8) qui est positionnée sur un côté interne de ladite partie de support (7) et qui soutient ladite partie de support (7) en rotation ; et
un boîtier (6) qui soutient ledit commutateur (5) et qui comprend des colonnes de support (10b, 10c) soutenant ladite bague de support (8) en rotation,
**caractérisée en ce que** le boîtier (6) comprend une partie inférieure (10a) et **en ce que** les colonnes de support (10b, 10c) sont verticalement formées à partir de ladite partie inférieure (10a) et sont positionnées sur un côté interne de ladite bague de support (8), où lesdites colonnes de support (10b, 10c) sont dotées d'une surface de positionnement d'arbre (10e) ayant un palier (23, 24) soutenant ladite bague de support (8), où ladite surface de positionnement d'arbre (10e) est inclinée vers un côté de bord de ladite bague de support (8) et un côté de la partie inférieure (10a) des colonnes de support (10b, 10c) s'approche d'un côte central de la partie d'éclairage (4) de sorte qu'une partie de bord de la partie d'éclairage (4) puisse tourner vers l'intérieur plus loin que le palier (23, 24) lors de la rotation vers le côté partie inférieure (10a).

2. Lampe intérieure (1) selon la revendication 1, dans laquelle lesdites colonnes de support (10b, 10c) sont dotées d'une nervure (log) dans une direction verticale sur une surface arrière (10f) de positionnement d'arbre qui est une surface sur un côté opposé de ladite surface (10e) de positionnement d'arbre soutenant ladite bague de support (8).

3. Lampe intérieure (1) selon la revendication 2, dans laquelle lesdites colonnes de support (10b, 10c) sont prévues de sorte que ladite surface arrière (10f) de positionnement d'arbre soit inclinée vers le côté de bord de ladite bague de support (8).
